# FASCICULE DE BREVET EUROPEEN

(11) **EP 3 224 144 B1**
(45) Date de publication et mention de la délivrance du brevet: **12.09.2018**
(21) Numéro de dépôt: 15817445.8
(22) Date de dépôt: 23.11.2015
(51) Int. Cl.: B64G 5/00, F02K 9/50, F02K 9/56, F02K 9/58, F02K 9/60

(54) **DISPOSITIF ET VERROUILLAGE D'UN DISPOSITIF D'AVITAILLEMENT**
VORRICHTUNG UND VERRIEGELN EINER BETANKUNGSVORRICHTUNG
DEVICE AND LOCKING OF A FUELING DEVICE

(30) Priorité: 28.11.2014 FR 1461646
(43) Date de publication de la demande: 04.10.2017
(73) Titulaire: ARIANEGROUP SAS, 75015 Paris (FR)
(72) Inventeur: YHUELLOU, Olivier, 27950 St-Marcel (FR); VERDIER, Georges, 27510 Tourny (FR); ADAM, Olivier, 27920 St Pierre de Bailleul (FR); BARRE, William, 27400 Louviers (FR)
(74) Mandataire: Calvo de Nó, Rodrigo
(86) Numéro de dépôt international: PCT/FR2015/053168
(87) Numéro de publication internationale: WO 2016/083713

(56) Documents cités:
- EP-A1- 0 371 867
- FR-A1- 2 685 903
- FR-A1- 2 943 627

## Description

### Arrière-plan de l'invention

La présente invention concerne le domaine des dispositifs d'avitaillement, en particulier pour l'avitaillement de fusées au sol.

On entend «fusée», dans ce contexte, dans un sens large s'étendant aussi à des engins avec au moins un étage à propulsion aérobie, et non pas uniquement à ceux n'utilisant que des moteurs fusées anaérobies. Une telle fusée peut notamment être un lanceur destiné à mettre une charge utile sur une trajectoire orbitale, extra-orbitale ou suborbitale.

Au sol, sur le pas de tir ou rampe de lancement, une telle fusée est souvent reliée à des conduits ombilicaux d'avitaillement en ergols, fluides de pressurisation, et/ou électricité jusqu'au moment même de son décollage, cf. EP 0 371 867. Ces conduits peuvent également fournir d'autres services, tels que, par exemple, la transmission de données entre la fusée et une station de contrôle. Afin d'assurer la connexion entre ces conduits ombilicaux et la fusée, ils présentent des paires de connecteurs mutuellement complémentaires souvent appelés « plaques à clapets » du fait de la présence de clapets destinés à arrêter l'écoulement de fluides lors de la séparation de ces connecteurs.

Sur certaines fusées actuelles, telles que par exemple les lanceurs de la famille Ariane 5, la séparation d'au moins certains de ces paires de connecteurs d'avitaillement mutuellement complémentaires est effectuée avant l'allumage des moteurs de propulsion du premier étage. En conséquence, il est normalement nécessaire de vérifier leur déconnexion avant le décollage de la fusée. Surtout, en cas de décollage avorté après séparation des connecteurs d'avitaillement, et en particulier quand des réservoirs de la fusée contiennent des liquides cryogéniques, notamment des ergols, la vidange de ces réservoirs à travers d'autres connecteurs, ainsi que le remplacement des connecteurs d'avitaillement, deviennent typiquement nécessaires. Or, ceci implique des moyens coûteux d'intervention, ainsi que l'immobilisation de la fusée pendant un temps précieux.

### Objet et résumé de l'invention

La présente divulgation vise à remédier à ces inconvénients. En particulier, elle vise à proposer un dispositif d'avitaillement comprenant au moins deux connecteurs d'avitaillement mutuellement complémentaires, apte notamment à l'avitaillement d'une fusée au sol, et qui puisse être déverrouillé de manière extrêmement fiable en réponse à un déplacement relatif de deux éléments, comme par exemple celui d'une fusée par rapport à son pas de tir lors de son décollage effectif.

Dans au moins un mode de réalisation, ce but est atteint grâce au fait que le dispositif d'avitaillement comprend aussi un organe de liaison brisable reliant lesdits deux connecteurs d'avitaillement, et présentant une section de rupture entre ces deux connecteurs d'avitaillement, et un organe de transmission d'efforts relié à ladite section de rupture de l'organe de liaison brisable, de manière à lui transmettre une charge de rupture en torsion pour déverrouiller la liaison entre les deux connecteurs d'avitaillement. Grâce à ces dispositions, le déverrouillage peut donc s'effectuer de manière simple, par rupture de l'organe de liaison à sa section de rupture, provoquée par la charge de torsion transmise par l'organe de transmission d'efforts.

En particulier, ledit organe de transmission d'efforts peut être un levier sensiblement perpendiculaire audit axe principal de l'organe de liaison. Par « sensiblement perpendiculaire » on entend, dans le présent contexte, que l'orientation de cet axe principal ne diffère de plus de, par exemple, 5 ou 10° de l'orientation d'un axe orthogonal au plan de rotation du levier. Ainsi, la charge de rupture peut être transmise à la section de rupture de l'organe de liaison, la longueur du levier assurant au moins une partie de la démultiplication de cet effort de rupture, de manière à ce qu'une force modérée en bout du bras de ce levier puisse suffire à rompre la section de rupture de l'organe de liaison par torsion. En outre, grâce à cette configuration, l'organe de transmission d'efforts peut être actionné par une force orthogonale à l'axe principal de l'organe de liaison, ce qui simplifie l'arrangement du dispositif d'avitaillement, notamment pour un dispositif d'avitaillement de fusée. A part le levier, d'autres dispositifs, tels que des poulies ou cabestans, peuvent aussi contribuer à la démultiplication de l'effort de rupture.

En outre, ledit organe de liaison est creux, formant un conduit entre lesdites deux extrémités. Ainsi, l'organe de liaison peut aussi servir au transfert de fluides, notamment un ergol ou un gaz de pressurisation, d'un côté à l'autre du dispositif d'avitaillement.

Lesdits connecteurs d'avitaillement peuvent être configurés pour raccorder de manière sensiblement étanche des conduits d'au moins un fluide, notamment un liquide et plus particulièrement un ergol.

En outre, le dispositif d'avitaillement peut aussi comprendre au moins un ressort élastique disposé de manière à écarter lesdits deux connecteurs après rupture de l'organe de liaison, ce qui constitue un moyen particulièrement simple et effectif d'assurer la séparation des deux connecteurs. Toutefois, d'autres types d'actionneur, par exemple des actionneurs magnétiques, électriques ou fluidiques, peuvent également être envisagés alternativement ou en complément de l'actionnement par ressort élastique. Il est même envisageable de se passer entièrement d'actionneur, la séparation des connecteurs pouvant être assurée par la seule gravité et/ou l'inertie.

Finalement, le dispositif d'avitaillement peut comprendre aussi une ligne de traction reliée à l'organe de transmission d'efforts. Ainsi, le déverrouillage du connecteur d'avitaillement peut être assuré de manière simple, fiable et effective par traction de la ligne de traction sur l'organe de transmission d'efforts, traction pouvant notamment résulter du déplacement vertical de la fusée au décollage.

La divulgation concerne aussi un procédé de déverrouillage d'un dispositif d'avitaillement dans lequel une charge de rupture en torsion transmise par un organe de transmission d'efforts assure la rupture d'une section de rupture d'un organe de liaison brisable, brisant ainsi une liaison entre deux connecteurs d'avitaillement dudit dispositif d'avitaillement qui sont mutuellement complémentaires. En particulier, ledit organe de transmission d'efforts peut-être un levier sensiblement perpendiculaire à un axe principal de l'organe de liaison reliant ses deux extrémités, ce levier transmettant une charge de rupture en torsion à l'organe de liaison brisable. Ce procédé peut notamment servir à déverrouiller un dispositif d'avitaillement d'une fusée, reliant initialement ladite fusée à des services d'avitaillement au sol.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 illustre schématiquement un lanceur spatial sur son pas de tir avant son lancement ;
- la figure 2 illustre schématiquement le lanceur spatial de la figure 1 dans une phase initiale de décollage ;
- la figure 3A est une vue frontale d'une paire de connecteurs d'avitaillement mutuellement complémentaires d'un dispositif d'avitaillement suivant un mode de réalisation de l'invention, en position verrouillée ;
- la figure 3B est une vue en coupe longitudinale, suivant la ligne B-B, des connecteurs d'avitaillement de la figure 3A ;
- la figure 4 est une vue en perspective du dispositif de déverrouillage des connecteurs d'avitaillement des figures 3A et 3B ;
- la figure 5A est une vue frontale des connecteurs d'avitaillement des figures 3A et 3B, en cours de déverrouillage ;
- la figure 5B est une vue en coupe longitudinale des connecteurs d'avitaillement de la figure 4A ; et
- la figure 6 est une vue en coupe longitudinale des connecteurs d'avitaillement des figures 3A à 4B, après déverrouillage.

### Description détaillée de l'invention

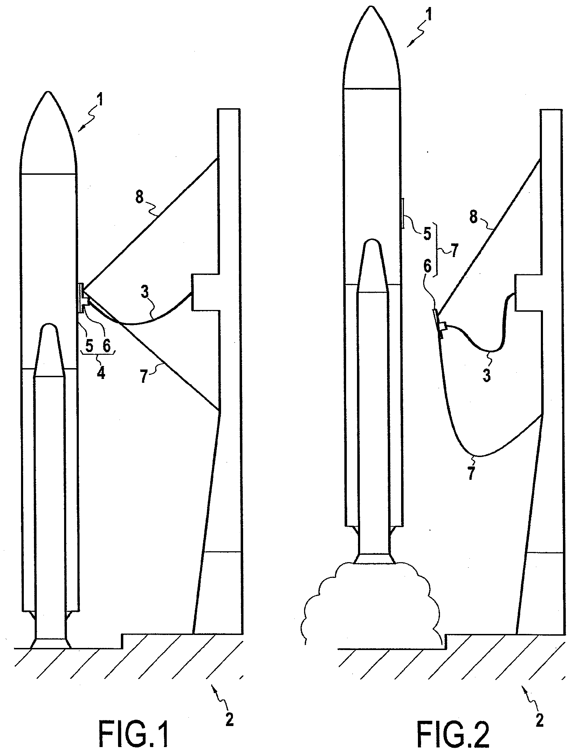

La figure 1 illustre une fusée 1 à ergols liquides, destinée au lancement de satellites, sur son pas de tir 2 avant son décollage. Dans cette position, la fusée 1 est connectée, pour son avitaillement en ergols, ainsi que par exemple en gaz de pressurisation et/ou électricité, à des conduits ombilicaux 3, à travers un dispositif d'avitaillement 4 comprenant des connecteurs mutuellement complémentaires 5,6 verrouillés l'un à l'autre et fixés respectivement à la fusée 1 et aux conduits ombilicaux 3. On appelle normalement ces connecteurs complémentaires 5,6 des « plaques à clapets » parce qu'ils sont équipés de clapets permettant d'arrêter l'écoulement de fluide lors de leur séparation. Une ligne de traction 7 reliant le connecteur 6 côté sol au pas de tir 2 permet de déclencher le déverrouillage et la séparation des connecteurs complémentaires 5,6 lors du décollage de la fusée 1, comme illustré sur la figure 2. En outre, un dispositif d'éloignement 8 du connecteur 6 peut permettre de faciliter la séparation des connecteurs complémentaires 5,6 une fois déverrouillés lors du décollage de la fusée 1. Dans le mode de réalisation illustré, ce dispositif d'éloignement 8 est formé par une simple ligne de traction supplémentaire, reliant le connecteur 6 côté sol à un point du pas de tir 2 plus élevé et décalé latéralement de la fusée 1, de telle manière que la chute du connecteur 6 par simple gravité après déverrouillage de sa liaison au connecteur 5 complémentaire va entraîner aussi un mouvement latéral d'éloignement de la fusée 1. Toutefois, d'autres configurations alternatives, comme par exemple des bras rigides basculant latéralement, peuvent également être envisagées.

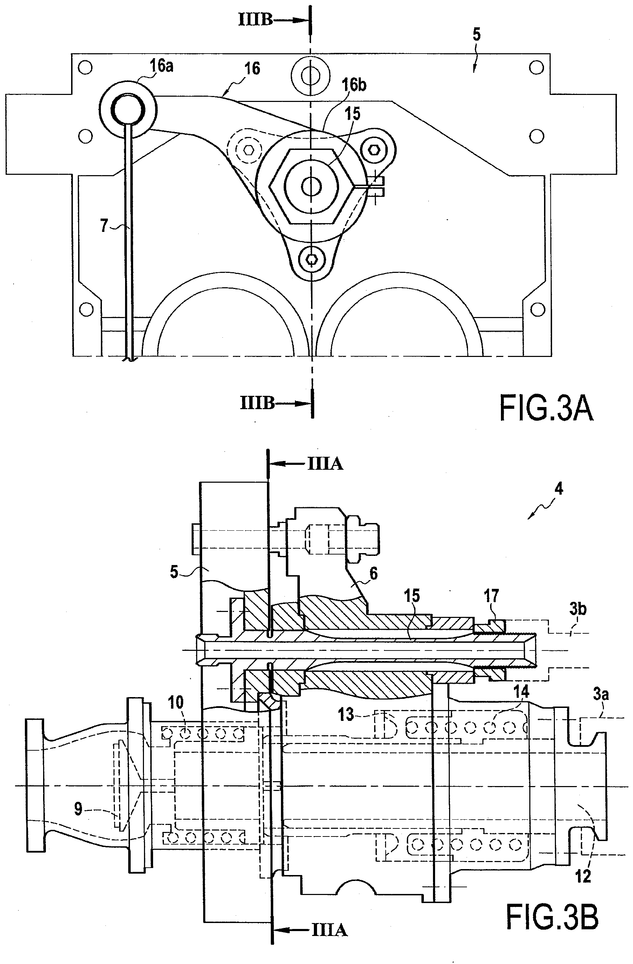

Les figures 3A et 3B illustrent en détail le dispositif d'avitaillement 4. Dans ce dispositif d'avitaillement 4, le connecteur d'avitaillement 5 est solidaire d'une paroi extérieure de la fusée 1 et, dans le mode de réalisation illustré, relié par des conduits à un premier et un deuxième réservoir d'ergols et à un réservoir de gaz de pressurisation (non illustrés) pour leur avitaillement. Ce connecteur 5 est en outre équipé de clapets 9 pour isoler les réservoirs d'ergols lors de sa séparation du connecteur complémentaire 6. Chaque clapet 9 est équipé d'un ressort 10 exerçant une contrainte dans le sens de la fermeture du clapet 9.

Dans le mode de réalisation illustré, le connecteur d'avitaillement côté sol 6 comprend des conduits 12 reliés à des conduits ombilicaux 3a d'avitaillement en ergols. Un coulisseau 13 est monté autour de chacun des conduits à ergols 12, en regard à des surfaces d'actionnement des clapets 9. Ces coulisseaux 13 sont aussi équipés de ressorts 14, lesquels exercent une contrainte en sens opposé aux ressorts 10 des clapets 9. Ainsi, les coulisseaux 13, poussant sur les surfaces d'actionnement des clapets 9, les maintiennent en position ouverte tant que la liaison entre les connecteurs 5 et 6 est maintenue. Le connecteur 6 côté sol peut également être équipé de clapets (non illustrés) pour arrêter l'écoulement de ces fluides lors de la séparation des connecteurs 5,6.

Pour assurer la liaison entre les connecteurs 5 et 6, le dispositif d'avitaillement 4 comprend notamment un organe de liaison brisable 15, avec une première extrémité 15a solidaire du connecteur 5 côté fusée, une deuxième extrémité 15b, solidaire du connecteur d'avitaillement 6 côté sol et une section de rupture 15c située entre lesdites première et deuxième extrémités 15a,15b. Le dispositif d'avitaillement 4 comprend en outre un organe de transmission d'efforts 16, apte à transmettre une charge de rupture à ladite section de rupture 15c de l'organe de liaison 15.

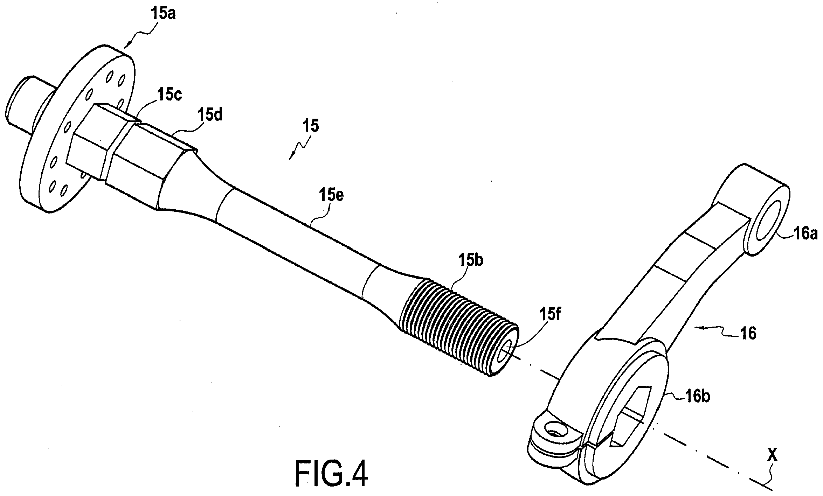

Dans le mode de réalisation illustré, l'organe de transmission d'efforts 16 prend la forme d'un levier avec une extrémité distale 16a reliée à la ligne de traction 7 et une extrémité proximale 16b solidaire de l'organe de liaison 15 en rotation. Ce levier est disposé pour tourner autour de son extrémité proximale 16b dans un plan sensiblement perpendiculaire à un axe principal X de l'organe de liaison 15. Pour transmettre une charge de rupture en torsion à la section de rupture 15c de l'organe de liaison 15, l'extrémité proximale 16b de l'organe de transmission d'efforts 16 est emboitée sur un segment 15d de l'organe de liaison 15 présentant une section prismatique. Comme illustré sur la figure 4, la section de rupture 15c de l'organe de liaison 15 est directement interposée entre ce segment 15d à section prismatique et un segment de la première extrémité 15a de l'organe de liaison 15 qui est également prismatique et reçu dans une cavité du connecteur 5 à section complémentaire afin d'assurer leur solidarité en rotation par rapport au connecteur 5. La section de rupture 15c est plus mince que la section prismatique du segment 15d ou de la première extrémité 15a de l'organe de liaison 15, de manière à assurer la rupture de l'organe de liaison 15 à cet endroit lorsqu'une charge de rupture en torsion est transmise par l'organe de transmission d'efforts 16 à l'organe de liaison 15. Par ailleurs, l'organe de liaison 15 présente aussi un segment de précontrainte 15e entre sa section prismatique 15d et sa deuxième extrémité 15b, laquelle est fixée au connecteur 6 côté sol par un écrou 17. Ce segment de précontrainte 15e permet d'établir une précontrainte en tension entre les deux extrémités 15a, 15b de l'organe de liaison 15, poussant ainsi les connecteurs complémentaires 5,6 l'un contre l'autre pour assurer l'étanchéité de leur connexion. En outre, ce segment de précontrainte 15e présente aussi une certaine élasticité en torsion permettant ainsi une rotation limitée de la section prismatique 15d par rapport à la deuxième extrémité 15b du connecteur.

L'organe de liaison 15 illustré est par ailleurs creux, étant traversé d'une extrémité à l'autre par le conduit 15f, lequel peut servir aussi à l'avitaillement en fluide. Ainsi, dans le mode de réalisation illustré, le conduit 15f est relié à un conduit 3b d'avitaillement en gaz pressurisé. Il n'est toutefois pas exclu que, dans d'autres modes de réalisation, ce conduit 15f traversant l'organe de liaison 15 puisse servir à l'avitaillement en ergols ou en autres fluides ou services.

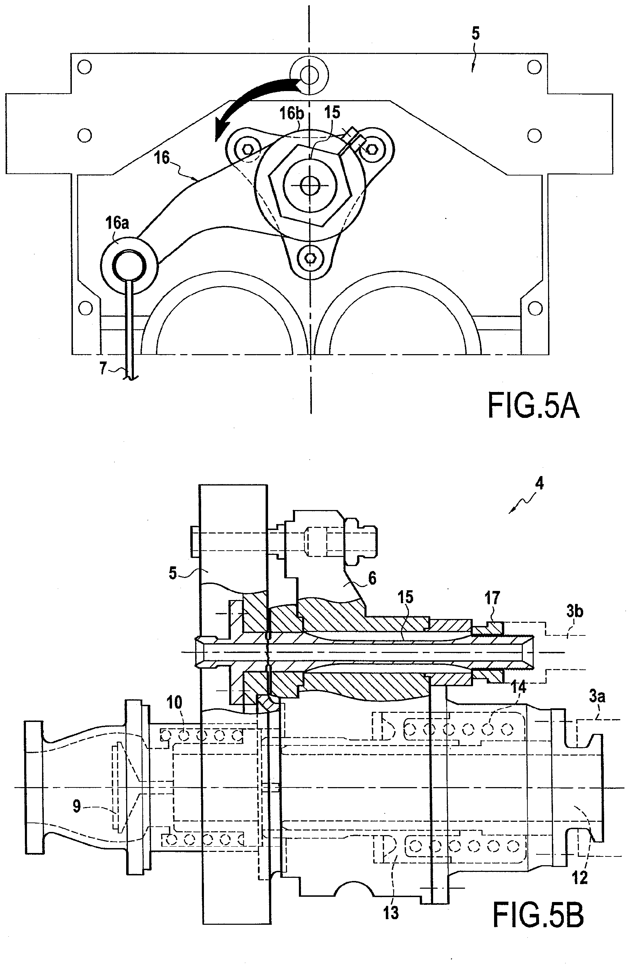

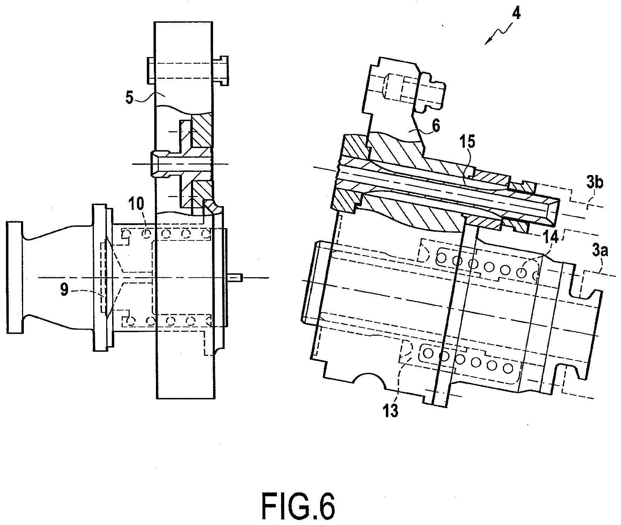

Le déverrouillage du dispositif d'avitaillement peut être expliqué en se référant aux figures 5A, 5B et 6. Dans la figure 5A, on peut voir comment le levier formant l'organe de transmission d'efforts 16 tourne autour de l'axe principal X de l'organe de liaison 15 suite à une traction sur la ligne de traction 7, traction pouvant notamment être provoquée par le décollage de la fusée 1 et son déplacement vertical par rapport au pas de tir 2. Comme on peut voir sur la figure 5B, cette rotation de l'organe de transmission d'efforts 16, transmise à la section de rupture 15c de l'organe de liaison 15 à travers sa section prismatique 15d, provoque la rupture de l'organe de liaison 15 à cet endroit, désolidarisant les deux extrémités 15a,15b de l'organe de liaison 15 et déverrouillant ainsi la liaison entre les deux connecteurs 5,6. Suite à ce déverrouillage, les précontraintes des ressorts 10,14 contribuent à l'écartement des deux extrémités 15a, 15b de l'organe de liaison 15, et donc des deux connecteurs 15a, 15b, comme illustré sur la figure 6 et, dans le contexte du décollage de la fusée 1, sur la figure 2.

De cette manière, on obtient un déverrouillage simple et fiable des connecteurs d'avitaillement 5,6 en réponse au décollage effectif de la fusée 1, permettant ainsi de remplacer les dispositifs de l'état de la technique qui imposaient un déverrouillage préalable à l'allumage de la fusée 1, avec les inconvénients susmentionnées en cas de lancement avorté après ce déverrouillage.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En particulier, il est envisageable d'utiliser, en complément à la torsion utilisée dans ce mode de réalisation, une charge de rupture en traction et/ou en flexion pour rompre l'organe de liaison de ce dispositif d'avitaillement. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Dispositif d'avitaillement (4), comprenant au moins :
deux connecteurs d'avitaillement (5,6) mutuellement complémentaires,
un organe de liaison brisable (15) reliant lesdits deux connecteurs d'avitaillement (5,6), et présentant une section de rupture (15c), et un organe de transmission d'efforts (16) relié à ladite section de rupture (15c) de l'organe de liaison (15), le dispositif d'avitaillement étant **caractérisé en ce que** l'organe de transmission d'efforts (16) est relié à ladite section de rupture (15c) de l'organe de liaison (15) de manière à lui transmettre une charge de rupture en torsion pour déverrouiller la liaison entre les deux connecteurs d'avitaillement (5,6).

2. Dispositif d'avitaillement (4) suivant la revendication 1, dans lequel ledit organe de transmission d'efforts (16) est un levier sensiblement perpendiculaire à un axe principal (X) de l'organe de liaison (15).

3. Dispositif d'avitaillement (4) suivant l'une quelconque des revendications précédentes, dans lequel ledit organe de liaison (15) est creux, formant un conduit (15f) entre les deux connecteurs d'avitaillement (5,6)

4. Dispositif d'avitaillement (4) suivant l'une quelconque des revendications précédentes dans lequel lesdits connecteurs d'avitaillement (5,6) sont configurés pour raccorder de manière sensiblement étanche des conduits d'avitaillement en moins un fluide.

5. Dispositif d'avitaillement (4) suivant l'une quelconque des revendications précédentes, comprenant en outre au moins un ressort élastique disposé de manière à écarter lesdits deux connecteurs d'avitaillement (5,6) après rupture de l'organe de liaison (15).

6. Dispositif d'avitaillement (4) suivant l'une quelconque des revendications précédentes, comprenant en outre une ligne de traction (7) reliée à l'organe de transmission d'efforts (16).

7. Procédé de déverrouillage d'un dispositif d'avitaillement (4), **caractérisé en ce qu'**une charge de rupture en torsion transmise par un organe de transmission d'efforts (16) assure la rupture d'une section de rupture (15c) d'un organe de liaison brisable (15), brisant ainsi une liaison entre deux connecteurs d'avitaillement (5,6) dudit dispositif d'avitaillement (4) qui sont mutuellement complémentaires.

8. Procédé de déverrouillage suivant la revendication 7 dans lequel ledit organe de transmission d'efforts (16) est un levier sensiblement perpendiculaire à un axe principal (X) de l'organe de liaison reliant ses deux extrémités (15a,15b), ce levier transmettant la charge de rupture en torsion à l'organe de liaison brisable (15).

## Patentansprüche

1. Betankungsvorrichtung (4), umfassend mindestens:
zwei zueinander komplementäre Betankungsverbindungsstücke (5, 6),
ein zerbrechbares Verbindungselement (15), das die zwei Betankungsverbindungsstücke (5, 6) verbindet und eine Sollbruchstelle (15c) aufweist, und
ein Kraftübertragungselement (16), das mit der Sollbruchstelle (15c) des Verbindungselements (15) verbunden ist, wobei die Betankungsvorrichtung **dadurch gekennzeichnet ist, dass** das Kraftübertragungselement (16) mit der Sollbruchstelle (15c) des Verbindungselements (15) derart verbunden ist, dass auf ihn eine Torsionsbruchlast übertragen wird, um die Verbindung zwischen den beiden Betankungsverbindungsstücken (5, 6) zu entriegeln.

2. Betankungsvorrichtung (4) nach Anspruch 1, wobei das Kraftübertragungselement (16) ein Hebel ist, der im Wesentlichen senkrecht zu einer Hauptachse (X) des Verbindungselements (15) ist.

3. Betankungsvorrichtung (4) nach einem der vorhergehenden Ansprüche, wobei das Verbindungselement (15) hohl ist und einen Kanal (15f) zwischen den zwei Betankungsverbindungsstücken (5, 6) bildet.

4. Betankungsvorrichtung (4) nach einem der vorhergehenden Ansprüche, wobei die Betankungsverbindungsstücke (5, 6) ausgebildet sind, um Betankungsleitungen für mindestens ein Fluid im Wesentlichen abzudichten.

5. Betankungsvorrichtung (4) nach einem der vorhergehenden Ansprüche, umfassend ferner mindestens eine elastische Feder, die angeordnet ist, um die zwei Betankungsverbindungsstücke (5, 6) nach dem Bruch des Verbindungselements (15) zu trennen.

6. Betankungsvorrichtung (4) nach einem der vorhergehenden Ansprüche, umfassend ferner eine Traktionsleitung (7), die mit dem Kraftübertragungselement (16) verbunden ist.

7. Verfahren zum Entriegeln einer Betankungsvorrichtung (4), **dadurch gekennzeichnet, dass** eine von einem Kraftübertragungselement (16) übertragene Torsionsbruchlast das Brechen einer Sollbruchstelle (15c) eines zerbrechbaren Verbindungselements (15) bereitstellt, wodurch eine Verbindung zwischen zwei Betankungsverbindungsstücken (5, 6) der Betankungsvorrichtung (4) unterbrochen wird, die zueinander komplementär sind.

8. Entriegelungsverfahren nach Anspruch 7, wobei das Kraftübertragungselement (16) ein Hebel ist, der im Wesentlichen senkrecht zu einer Hauptachse (X) des Verbindungselements, die seine beiden Enden (15a, 15b) verbindet, ist, wobei dieser Hebel die Torsionsbruchlast auf das zerbrechbare Verbindungselement (15) überträgt.

## Claims

1. A feeding device (4) comprising at least:
• two mutually complementary feeding connectors (5, 6); and
• a breakable connection member (15) connecting together said two feeding connectors (5, 6) and presenting a breakable section (15c); and
• a force transmission member (16) connected to said breakable section (15c) of the connection member (15), the feeding device being **characterized in that** the force transmission member (16) is connected to said breakable section (15c) of the connection member (15) so as to transmit a twisting breaking load thereto in order to unlock the connection between the two feeding connectors (5, 6).

2. A feeding device (4) according to claim 1, wherein said force transmission member (16) is a lever substantially perpendicular to a main axis (X) of the connection member (15).

3. A feeding device (4) according to any preceding claim, wherein said connection member (15) is hollow, forming a duct (15f) between the two feeding connectors (5, 6).

4. A feeding device (4) according to any preceding claim, wherein said feeding connectors (5, 6) are configured to connect together in substantially leaktight manner feeding ducts for at least one fluid.

5. A feeding device (4) according to any preceding claim, further comprising at least one resilient spring arranged so as to move said two feeding connectors (5, 6) apart after the connection member (15) has broken.

6. A feeding device (4) according to any preceding claim, further comprising a traction line (7) connected to the force transmission member (16).

7. An unlocking method for unlocking a feeding device (4), **characterized in that** a twisting breaking load transmitted by a force transmission member (16) serves to break a breakable section (15c) of a breakable connection member (15), thus breaking a connection between two mutually complementary feeding connectors (5, 6) of said feeding device (4).

8. An unlocking method according to claim 7, wherein said force transmission member (16) is a lever substantially perpendicular to a main axis (X) of the connection member connecting its two ends (15a, 15b) together, the lever transmitting the twisting breaking load to the breakable connection member (15).
